# EUROPÄISCHE PATENTSCHRIFT

(11) **EP 1 429 922 B1**
(45) Veröffentlichungstag und Bekanntmachung des Hinweises auf die Patenterteilung: **27.09.2006**
(21) Anmeldenummer: 02777132.8
(22) Anmeldetag: 17.09.2002
(51) Int. Cl.: B32B 37/20, B32B 38/00, B29C 59/14

(54) **VERFAHREN ZUM ZUSAMMENFÜGEN VON MATERIALIEN MITTELS ATMOSPHÄRISCHEM PLASMA**
METHOD FOR CONNECTING MATERIALS BY MEANS OF AN ATMOSPHERIC PLASMA
PROCEDE POUR ASSEMBLER DES MATERIAUX PAR PLASMA ATMOSPHERIQUE

(30) Priorität: 19.09.2001 DE 10146295
(43) Veröffentlichungstag der Anmeldung: 23.06.2004
(73) Patentinhaber: Wipak Walsrode GmbH & Co. KG, 29656 Walsrode (DE)
(72) Erfinder: JACOBSEN, Sven, 29683 Fallingbostel (DE); KUCKERTZ, Christian, 57462 Olpe (DE); BRANDT, Rainer, 29664 Düshorn (DE)
(74) Vertreter: Wolff, Felix
(86) Internationale Anmeldenummer: PCT/EP2002/010430
(87) Internationale Veröffentlichungsnummer: WO 2003/024716

(56) Entgegenhaltungen:
- EP-A- 0 851 720
- DE-A- 19 802 662
- DE-A- 19 810 680
- DE-A- 19 846 814

## Beschreibung

Die vorliegende Erfindung betrifft ein Verfahren zur Herstellung einer mehrschichtigen Folienbahn durch Zusammenfügen von mindestens zwei Folienbahnen und/oder mindestens einer Folienbahn und mindestens einem Beschichtungsmaterial, wobei mindestens eine Folienbahn und/oder mindestens ein Beschichtungsmaterial auf der Fügeseite mit einem indirekten atmosphärischen Plasmatron behandelt wird und dem Plasmatron ein Arbeitsgas zügefügt wird

Mehrschichtige Folien werden heutzutage auf vielen Gebieten eingesetzt Diese mehrschichtigen Folien werden durch die Verfahren des Laminierens, Kaschierens, Beschichtens oder des sogenannten Sandwitchens mindestens zweier Folienbahnen und/oder polymerer Materialien erzeugt, indem aus den einzelnen Folien oder Beschichtungsmaterialien unter Zuhilfenahme eines Klebstoffes, Primers und/oder Haftvermittlers eine mehrschichtige Folie hergestellt wird.

Außerdem können gemäß dem Stand der Technik zwei Folienbahnen auch durch die Veränderung der Oberfläche eines der beiden Verbundpartner erzeugt werden. So ist beispielsweise aus der DE OS 198 02 662 ein Verfahren bekannt, bei dem durch Koronabehandlung einer Polymeroberfläche zwei Folienbahnen ohne Verwendung eines Klebstoffes miteinander verbunden werden. Das Verbinden zweier Folienbahnen miteinander kann auch unter Verwendung eines atmosphärischen Plasmas erfolgen. Dieses Verfahren wird beispielsweise in der DE OS 198 10 680 offenbart, bei dem die Folie auf der Fügeseite mit einem atmosphärischen Plasma behandelt wird. Bei dem atmosphärischen Plasma-Verfahren wird eine definierte Gasatmosphäre, das Plasmagas, in einem Plasmabrenner, dessen Elektroden sie umspült, durch eine elektrische Entladung erzeugt. Durch diese Entladung wird das Plasmagas aktiviert und durch einen konstanten Gasstrom auf die Folienoberfläche transportiert, wobei die elektrische Entladung nicht in Kontakt mit der Folienoberfläche gelangt Gemäß dem Stand der Technik kann mit diesem Verfahren jedoch nur Polyethylen (PE) in besonders vorteilhafter Weise mit anderen Folien verbunden werden. Bei anderen Materialkombinationen sind die erzielbaren Verbundhaftungswerte in der Regel nicht mit denen der Kaschierung oder Laminierung vergleichbar.

Es stellte sich deshalb die Aufgabe, ein Verfahren zur Herstellung von mehrschichtigen Folienbahnen unter Verwendung des atmosphärischen Plasmas zur Verfügung zu stellen, mit dem nahezu eine beliebige Materialkombination an Folien oder Folien- und Beschichtungsmaterialien miteinander kombiniert werden können und Verbundhaftüngswerte erzielbar sind, die mit denen der Kaschierung oder Laminierung vergleichbar sind.

Gelöst wird dieses Aufgabe durch ein Verfahren zur Herstellung einer mehrschichtigen Folienbahn durch Zusammenfügen von mindestens zwei Folienbahnen und/oder mindestens einer Folienbahn und mindestens einem Beschichtungsmaterial, wobei mindestens eine Folienbahn und/oder mindestens ein Beschichtungsmaterial auf der Fügeseite mit einem vorzugsweise indirekten atmosphärischen Plasmatron behandelt wird und dem Plasmatron ein Arbeitsgas zügefügt wird, wobei das Arbeitsgas mindestens ein reaktives Gas, mindestens ein reaktives Aerosol, mindestens ein Inertgas oder mindestens ein inertes Aerosol aufweist und der Verbundhaftungswert zwischen den zusammengefügten Materialien nach der Plasmabehandlung mindestens 1N/15mm, vorzugsweise 2N/15mm beträgt.

Überraschenderweise kann durch Anpassen der verwendeten Arbeitsgase auf die zusammenzufügenden Materialoberflächen nahezu jede beliebige Materialkombination ohne Verwendung von Haftvermittlern, Primern oder Klebstoffen so miteinander zusammengefügt werden, daß eine Verbundhaftung der Materialien erzeugt wird, die gleichwertig zu den heute üblichen Verbundhaftungswerten der Laminierung oder Kaschierung oder aber diesen sogar überlegen sind. In vielen Fällen wird eine Verbundhaftung in einer Größenordnung erzielt, die in der Materialverbindung als untrennbar bezeichnet werden kann.

Chemisch und/oder physikalisch kompatibel im Sinne der Erfindung bedeutet, daß nach der Plasmabehandlung unter Auswahl des jeweiligen Arbeitsgases Verbundhaftungswerte von mindestens 1 N/15 mm, vorzugsweise mindestens 2 N/15mm, gemessen gemäß DIN 53357, Verfahren B, erreicht werden.

Das Arbeitsgas wird erfindungsgemäß einem Plasmatron zugefügt und dort an einem Gleichstrombogen, der zwischen zwei Elektroden brennt entlanggeführt, vorzugsweise senkrecht hindurchgeführt. Dadurch wird das Arbeitsgas aktiviert und/oder in Molekülbruchstücke aufgespalten. Molekülbruchstücke sind vorzugsweise Ionen, Elektronen und/oder Radikale. Das so behandelte Arbeitsgas trifft dann auf die zu behandelnde Oberfläche der Folienbahn und/oder des Beschichtungsmaterials.

Erfindungsgemäß weist das Arbeitsgas mindestens ein reaktives Gas, mindestens ein reaktives Aerosol, mindestens ein Inertgas oder mindestens ein inertes Aerosol auf. Vorzugsweise ist das Arbeitsgas eine beliebige Mischung aus mindestens zwei dieser Komponenten. Ebenfalls bevorzugt ist das Arbeitsgas eine Mischung aus mindestens einem reaktiven Gas oder mindestens einem reaktiven Aerosol und mindestens einem Inertgas oder einem inerten Aerosol.

Das Arbeitsgas wird erfindungsgemäß so auf die zusammenzufügenden Oberflächen abgestimmt, daß mindestens eine so modifiziert wird, daß die Oberflächen chemisch und/oder physikalisch kompatibel zueinander sind. Vorzugsweise wird mindestens eine Oberfläche mit dem Plasmatron so behandelt, daß dort Gruppen gebildet werden, die zur zweiten Oberfläche, die mit der ersten verbunden werden soll, eine besondere Affinität haben. Besonders bevorzugt wird das Arbeitsgas jedoch auf die zusammenzufügende Materialkombination abgestimmt auch wenn nur eine der beiden Folienoberflächen mit dem Plasmatron behandelt wird. Weist eine Folienbahn an der Oberfläche Carboxylgruppen auf, so wird die Oberfläche der anderen Folienbahn vorzugsweise so mit dem Plasmatron bearbeitet, daß diese auch Carboxyl- oder OH-Gruppen aufweist.

Vorzugsweise sind die reaktiven Gase und/oder Aerosole oxidierend wirkende, reduzierend wirkend, vernetzende und/oder pfropfbare Gase und/oder Aerosole, die entsprechend ihrer Bezeichnung auf der jeweiligen Folienoberfläche zu entsprechenden Reaktionen führen.

Die eingesetzten Gase können dabei vorzugsweise in beliebigen Mischungen zueinander verwendet werden, in Abhängigkeit der zusammenzufügenden Materialien. Bevorzugt sind auch Mischungen aus reaktiven und inerten Arbeitsgasen anzuwenden, wobei die reaktiven Gase vorzugsweise einen Anteil von 5% bis 95% bezogen auf die Gesamtmischung ausmachen.

Als oxidierende Gase und/oder Aerosole werden vorzugsweise sauerstoffhaltige Gase und/oder Aerosole wie Sauerstoff (O₂), Kohlendioxid (CO₂), Kohlenmonoxid (CO), Ozon (O₃), Wasserstoffperoxid-Gas (H₂O₂), Wasserdampf (H₂O), verdampftes Methanol (CH₃OH), stickstoffhaltige Gase und/oder Aerosole wie nitrose Gase NOₓ), Distickstoffoxid N₂O), Stickstoff (N₂), Aminoniak (NH₃), Hydrazin (H₂N₄), schwefelhaltige Gase und/oder Aerosole wie Schwefeldioxid (SO₂), Schwefeltrioxid (SO₃), fluorhaltige Gase und/oder Aerosole wie Terafluorkohlenstoff (CF₄), Schwefelhexafluorid (SF₆), Xenondifluorid (XEF₂), Stickstofftrifluorid (NF₃), Bortrifluorid (BF₃), Siliciumtetrafluorid (SiF₄), Wasserstoff (H₂) oder Mischungen aus mindestens zwei dieser Gase und/oder Aerosole eingesetzt.

Als reduzierende Gase und /oder Aerosole werden vorzugsweise H₂S, SO₂, Aldehyde, anorganische Schwefelverbindungen eingesetzt

Inertgase sind vorzugsweise Edelgase, bevorzugt ist Argon (Ar).

Als vemetzbare Gase und/oder Aerosole werden vorzugsweise mindestens einfach ungesättigte Kohlenwasserstoffe wie z.B. α-Olefine, wie Ethylen, Propylen, Buten, Acetylen oder Butadien; gesättigte Kohlenwasserstoffe mit der allgemeinen Zusammensetzung CₙH₂ₙ₊₂, wie Methan, Ethan, Propan, Butan, Pentan, iso-Propan, iso-Butan; Vinylverbindungen wie Vinylacetat; ungesättigte Carbonsäuren und deren Ester wie Acrylsäure, Methacrylsäure, (Meth)acrvlsäurealkylester wie (Meth)acrvlsäurethylester, Silane der allgemeinen Formel SiₙH₂ₙ₊₂, halogenierte Siliziumchloride wie SiCl₄, SiCl₃H, SiCl₂H₂, SiClH₃, Alkoxysilane wie Tetraethoxysilan; Hexamethyldisilazan; Hexamethyldisiloxan eingesetzt

Als pfropfbare Gase und/oder Aerosole werden vorzugsweise Maleinsäureanhydrid, Acrylsäureverbindungen, Vinylverbindungen, Kohlendioxid (CO₂) eingesetzt.

Der Fachmann erkennt jedoch, daß die Wirkung des jeweiligen Gases von der zu behandelnden Folie abhängt. So kann beispielsweise dasselbe Gas bei einer Folie oxidierend und bei einer anderen Folie reduzierend wirken. Das gleiche gilt für pfropfende und vernetzende Gase.

Für den Verbund einer Polyolefinfolie mit einer metallisierten oder bedruckten Polyethylenterephthalatfolie (PET-Folie), wird die Polyolefinfolie vorzugsweise mit einem Plasma, das auf einem oxidierenden Arbeitsgas basiert, ganz besonders bevorzugt mit O₂ und/oder CO₂, behandelt.

Der Fachmann versteht, daß unter Polyolefinen sowohl Homo- als auch Copolymere zu verstehen sind, vorzugsweise basierend auf Polyethylen (High Desnsity Polyethylen, Low Density Polyethylen, Linear Low Density Polyethylen); metallocen katalysierten Typen; ebenfalls bevorzugt basierend auf Ethylen-Propylen-Copolymeren, Ethylen-Octen-Copolymeren, Isomeren, Ethylenvinylacetat-Copolymeren, Ethylenmethylacrylat-Copolymeren.

Für den Verbund einer Polyolefinfolie, vorzugsweise Polyethylen, mit einer PET-Folie, wird die PET-Folie vorzugsweise mit einem Plasma, das auf einem reduzierenden Arbeitsgas basiert, ganz besonders bevorzugt mit H₂S, SO₂, Aldehyde, anorganische Schwefelverbindungen, behandelt.

Für den Verbund einer Polyolefinfolie mit einer Polypropylenfolie (PP-Folie) oder einer biaxial orientierten Polyamidfolie (PAB-Folie) werden beide Folien vorzugsweise mit einem Plasma, das auf einem oxidierendes Arbeitsgas basiert, ganz besonders bevorzugt mit O₂ und/oder CO₂ behandelt.

Für den Verbund einer Polyolefinfolie, vorzugsweise Polyethylen, mit einer (PET-Folie) wird die Polyolefinfolie vorzugsweise mit einem Plasma, das auf einem Arbeitsgasgemisch aus Argon und O₂ basiert, behandelt, wobei das Mischungsverhältnis Ar/O₂ vorzugsweise
1,2 - 0,6, besonders bevorzugt 0,75 - 0,95 beträgt. Die PE-Folie kann Low Density PE (LDPE) und/oder Linear Low Density PE (LLDPE) sein.

Für den Verbund einer Polyolefinfolie, vorzugsweise Polyethylen, mit einer Metallschicht wird die Polyolefinfolie vorzugsweise mit einem Plasma, das auf einem Arbeitsgasgemisch aus Argon und O₂ basiert, behandelt, wobei das Mischungsverhältnis Ar/O₂ vorzugsweise 1,0 - 0,4, besonders bevorzugt 0,8 - 0,6, beträgt. Die PE-Folie kann Low Density PE (LDPE) und/oder Linear Low Density PE (LLDPE) sein.

Für den Verbund einer Polyolefinfolie, vorzugsweise Polyethylen, mit einer Farbschicht, die auf Polyvinylchlorid, Polyvinylbutyrat und/oder Nitrocellulose basiert, wird die Polyolefinfolie vorzugsweise mit einem Plasma, das auf einem Arbeitsgasgemisch aus Argon und O₂ basiert, behandelt, wobei das Mischungsverhältnis Ar/O₂ vorzugsweise 1,3 - 0,7, besonders bevorzugt 1,0 - 0,9 beträgt. Die PE-Folie kann Low Density PE (LDPE) und/oder Linear Low Density PE (LLDPE) sein.

Für den Verbund einer Folie aus einem PE/PP Copolymeren (PE/PP-Folie) mit einer vorzugsweise bidirektional gereckten Polyamid-Folie (PA-Folie) wird die PE/PP-Folie vorzugsweise mit einem Plasma, das auf einem Arbeitsgasgemisch aus Argon und CO₂ basiert, behandelt, wobei das Mischungsverhältnis Ar/CO₂ vorzugsweise 0,1- 0,5, besonders bevorzugt 0,2 - 0,4 beträgt.

Das Arbeitsgas hat vorzugsweise einen konstanten Volumenstrom und eine konstante Zusammensetzung. Ebenfalls bevorzugt werden der Volumenstrom und/oder die Zusammensetzung während des Herstellungsprozesses der Verbundfolie regelmäßig oder unregelmäßig verändert.

Das erfindungsgemäße Verfahren kann z.B. mit einem indirekten Plasmatron durchgeführt werden, wie es in der EP A 85 1720 beschrieben wird, aber auch andere atmosphärische Plasmabrenner, bei denen zusätzliche Arbeitsgase Zugeführt werden können und eine flächige Behandlung gegeben ist, können dazu verwendet werden.

Der Brenner weist vorzugsweise zwei koaxial in größerem Abstand angeordnete Elektroden auf. Zwischen diesen brennt ein Gleichstrombogen, der vorzugsweise durch eine kaskadierte Anordnung frei einstellbarer Länge wandstabilisiert wird. Durch ein Anblasen mit einem Arbeitsgas vorzugsweise transversal zur Bogenachse tritt ein vorzugsweise seitlich abströmender, vorzugsweise bandförmiger Plasmastrahl aus. Das Arbeitsgas durchläuft dabei den Gleichstrombogen und wird in diesem aktiviert, oder in Molekülbruchstücke (Ionen, Elektronen, Radikale) aufgespalten. Er kommt jedoch vorteilhafterweise nicht mit den Elektroden in Berührung, die insbesondere durch reaktive Spezies geschädigt werden können. Dieser Brenner, auch Plasmabreitstrahlbrenner genannt, zeichnet sich vorzugsweise auch dadurch aus, daß ein Magnetfeld auf den Lichtbogen eine Kraft ausübt, die der durch die Strömung des Plasmagases auf den Lichtbogen ausgeübten Kraft entgegenwirkt. Dieser hier dargestellte Brenner ist nur ein Beispiel für eine Ausführungsform des gemäß dem erfindungsgemäßen Verfahren einzusetzenden atmosphärischen Plasmabrenners. Es sind auch andere Ausführungsformen denkbar, bei denen Zufuhrmöglichkeiten sowohl für ein die Elektrode umströmendes Plasmagas, als auch ein Arbeitsgas, gegeben sind.

Als Plasmagas, das die Elektroden schützt, wird vorzugsweise ein Inertgas eingesetzt.

Vorzugsweise wird das indirekte Plasmatron unmittelbar vor dem Kaschierspalt einer herkömmlichen Kaschiermaschine errichtet und gezielt auf die Fügeseite eines der beiden Materialien, die miteinander verbunden werden sollen, zur Einwirkung gebracht. Alternativ werden vorzugsweise direkt im Kaschierspalt beide Fügeoberflächen vorzugsweise gleichzeitig behandelt. Die Entscheidung darüber, ob eine Fügeoberfläche oder beide Fügeoberflächen vorteilhaft zu behandeln sind, ist dabei von den zusammenzufügenden Materialien und der Zusammensetzung des Plasmagases abhängig und ist in jedem Fall neu zu entscheiden. Ähnliche Ausführungsmöglichkeiten sind bei Beschichtungs- bzw. Sandwichanlagen, direkt vor der Zusammenführung der einzelnen Materialien möglich, wobei in besonders vorteilhafter Weise die Schmelzefahne des Beschichtungsmaterials behandelt wird.

Die Behandlung mindestens einer Folienoberfläche erfolgt vorzugsweise vollflächig, was bedeutet, daß die Behandlung mindestens einer Oberfläche, die zur Zusammenführung gebracht wird, homogen auf der gesamten zur Verfügung stehenden Fläche ausgeführt wird. Es sind aber auch teilflächige Ausführungen denkbar, bei denen Streifen, Flächen oder Muster auf der zu behandelnden Fläche erzeugt werden. Bevorzugt ist auch eine flächig unterschiedliche Behandlung, die durch eine räumlich unterschiedliche Verwendung von unterschiedlichen Arbeitsgasen erzeugt wird.

Das Verfahren ist auf beliebige Kunststoffolien und Kunstoffbeschichtungsmaterialien anwendbar. Die Art des Kunststoffs ist dabei zunächst unerheblich. Wichtig ist lediglich, daß das Arbeitsgase auf die zusammenzufügenden Materialien abgestimmt wird. Weiterhin können aber insbesondere auch Metallfolien, vorzugsweise mit einer Dicke kleiner 100 µm mit beliebigen Kunststoffolien oder Kunststoffbeschichtungsmaterialien zusammengefügt werden. Auch hier ist die Art des Metalles nicht wesentlich. Besonders bevorzugt sind jedoch Aluminiumfolien, vorzugsweise in einer Dicke zwischen 4 µm und 30 µm.

In einer weiteren bevorzugten Ausführungsform ist zumindest eine der beiden zusammenzufügenden Folien auf zumindestens einer Seite, insbesondere auf der Fügeseite metallisiert oder mit einer Metall- oder Siliziumoxidschicht versehen. Diese Schichten sind vorzugsweise zwischen 100 und 500 A dick.

In einer weiteren bevorzugten Ausführung ist eine der zusammenzufügenden Folien auf mindestens einer Seite bedruckt. Besonders bevorzugt ist die Fügeseite bedruckt.

In einer ganz besonders bevorzugten Ausführung des erfindungsgemäßen Verfahrens ist eines der Fügematerialien, entweder eine der Folien oder eines der Beschichtungsmaterialien, ein siegelfähiges Material, vorzugsweise aus Polyolefin-Homo- oder Copolymeren oder amorphem Polyethylenterephthalat.

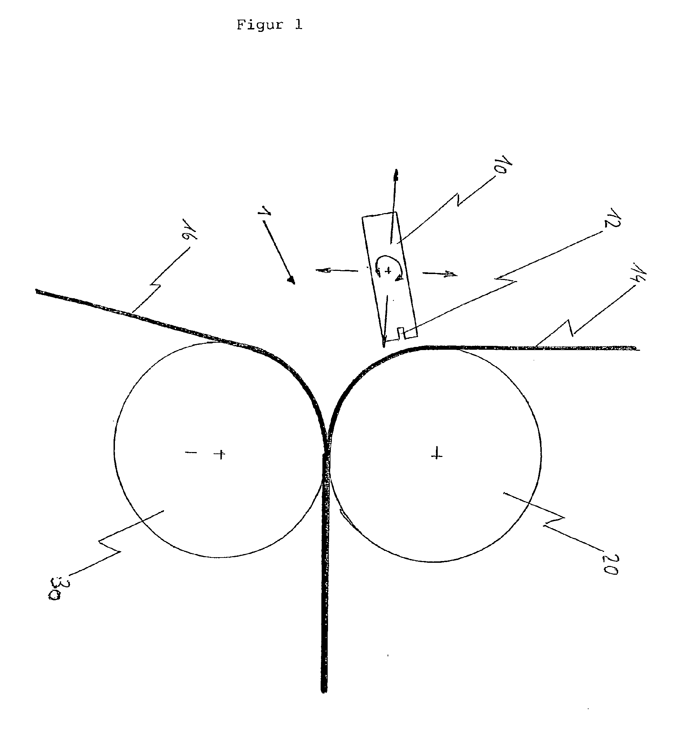

In den folgenden wird die Erfindung anhand von Figur 1 und den Beispielen 1 - 9 erläutert. Diese Erläuterungen sind lediglich beispielhaft und schränken den allgemeinen Erfindungsgedanken nicht ein.

Figur 1 zeigt den beispielhaften Aufbau einer Anlage, mit der das erfindungsgemäße Verfahren durchführbar ist. Die Behandlung der Folienoberfläche erfolgt unmittelbar vor dem Kaschierspalt. Der Plasmabrenner 10 ist horizontal und vertikal verfahrbar angeordnet und zusätzlich drehbar gelagert, was durch die Pfeile angedeutet ist. Der Plasmabrenner kann an jeder beliebigen Stelle vor dem Kaschierspalt zwischen den Kaschierwalzen 20, 30 positioniert werden, um das aus dem Plasmaspalt 12 austretende Plasmagas auf eine der beiden Oberflächen oder fakultativ auf beide Oberflächen gleichzeitig zur Einwirkung zu bringen. Die erste Folie 14 läuft um Kaschierwalze 20 und die untere Folie 16 entsprechend um die Kaschierwalze 30. Die Kaschierwalzen können jeweils gekühlt oder beheizt werden.

Es sind prinzipiell alle bekannten und denkbaren Verfahren zur Kaschierung, Beschichtung, Laminierung und zum Sandwichen denkbar, die nachträglich mit entsprechenden Plasmaaggregaten ausgerüstet werden können.

### Beispiel 1:

In einer handelsüblichen Kaschiermaschine werden zwei verschiedene Folienmaterialien zusammengebracht. Dazu ist die Kaschiermaschine bei einer Arbeitsbreite von 600 mm mit einem direkt vor dem Kaschierspalt angebrachten Plasmabrenner versehen, der durch räumliche Anordnung wahlweise eine der beiden Folien oder aber beide Folienoberflächen behandeln kann.

Als erste Folie wird eine 12 µm dicke Polyethylenterephthalat Folie dem Kaschierspalt zugeführt Diese wird nicht durch das Plasma behandelt Als zweite Folie wird eine 50 µm dicke Polyethylenfolie (50%LDPE, 50% LLDPE) zugeführt, die unmittelbar vor dem Kaschierspalt auf der gesamten Breite mit Plasmagas beaufschlagt wird. Der Austrittsspalt des Plasmagases befindet sich dabei 3 mm vor der Folienoberfläche entfernt. Die Kaschiergeschwindigkeit beträgt 20 m/min. Als Arbeitsgas werden eine Mischung aus 0,333ℓ·s⁻¹ [20 Standartliter pro Minute (slm)] Argon und 0,333ℓ·s⁻¹ [20 slm] Sauerstoff verwendet. Die Kathode und Anode werden jeweils mit 0,042ℓ·s⁻¹ [2,5 slm] Argon gespült. Nach dem Kaschierspalt ergeben sich Verbundhaftungswerte von 2,3 N/15 mm bis 2,7 N/15 mm. Diese und die folgenden Verbundhaftungswerte werden gemäß DIN 53357, Verfahren B gemessen.

### Beispiel 2

Bei diesem Versuch entsprechen die Versuchsbedingungen denen von Beispiel 1. Es wird jedoch der Abstand zwischen Plasmaaustrittsdüse und Folienoberfläche auf ca. 1,5 mm verringert, um eine bessere Einwirkung der reaktiven Plasmabestandteile zu erhalten. Der Verbundhaftungswert steigt auf > 5 N/15mm an. Der Verbund kann als nicht trennbar eingestuft werden, da einer der Verbundpartner zerstört wird.

### Beispiel 3

Die Versuche erfolgten auf der Kaschiermaschine gemäß Beispiel 1. Als erste Folie wird eine 50 µm dicke Polyethylenterephthalat Folie dem Kaschierspalt zugeführt Diese wird nicht durch das Plasma behandelt. Als zweite Folie wird eine 50 µm dicke Polyethylenfolie (50%LDPE. 50% LLDPE) zugeführt, die unmittelbar vor dem Kaschierspalt auf der gesamten Breite mit Plasmagas beaufschlagt wird. Der Austrittsspalt des Plasmagases befindet sich dabei 2 mm vor der Folienoberfläche entfernt. Die Kaschiergeschwindigkeit beträgt 10 m/min. Als Arbeitsgas werden eine Mischung aus 0,333ℓ·s⁻¹ [20 Standardliter pro Minute (slm)] Argon und 0,4ℓ·s⁻¹ [24 slm] Sauerstoff verwendet. Die Kathode und Anode werden jeweils mit 0,042ℓ·s⁻¹ [2,5 slm] Argon gespült. Der Verbundhaftungswert beträgt > 5 N/15 mm, so daß der Verbund als nicht trennbar eingestuft werden kann.

### Beispiel 4

Die Versuche erfolgten auf der Kaschiermaschine gemäß Beispiel 1. Als erste Folie wird ein 15 µm dickes biaxial orientiertes Polyamid dem Kaschierspalt zugeführt. Als zweite Folie wird ein 75 µm dicke Polyethylen/Polypropylen Copolymerfolie zugeführt. Die Polyamidfolie ist auf der Fügeseite im Tiefdruck mit einer PVC-basierenden Farbe bedruckt worden. Die Fügeseite des Copolymeren wird dabei kurz vor dem Kaschierspalt mit Plasmagas beaufschlagt. Die Kaschiergeschwindigkeit ist 20 m/min. Als Arbeitsgas wird eine Mischung aus 0,167ℓ·s⁻¹ [10 slm] Argon 4.5 und 0,417ℓ·s⁻¹ [25 slm] CO₂ verwendet. Die Kathode und die Anode werden mit jeweils 0,042ℓ·s⁻¹ [2,5 slm] Argon 5.0 gespült. Der Abstand zwischen Plasmaaustrittsöffnung und Folienoberfläche beträgt 2 mm. Nach dem Kaschierspalt ergeben sich Verbundhaftungswerte von > 3N/15mm. Das Trennbild ergibt eine Teilung der Farbschicht

### Beispiel 5

Die Versuche erfolgten auf der Kaschiermaschine gemäß Beispiel 1. Als erste Folie wird ein 60 µm dicke Polyethylen (LLDPE) dem Kaschierspalt zugeführt. Als zweite Folie ein 12 µm dicke PET-Folie, die eine Metallschicht aufweist, Die Polyethylenfolie wird auf der Fügeseite kurz vor dem Kaschierspalt mit Plasmagas beaufschlagt. Die Kaschiergeschwindigkeit ist 10 m/min Als Arbeitsgas wird eine Mischung aus 0,333 ℓ·s⁻¹ [20 slm] Argon 4.5 und 0,467 ℓ·s⁻¹ [28 slm] O₂ verwendet. Die Kathode und die Anode werden mit jeweils 0,042 ℓ·s⁻¹ [2,5 slm] Argon 5.0 gespült. Der Abstand zwischen Plasmaaustrittsöffnung und Folienoberfläche beträgt 2 mm. Nach dem Kaschierspalt ergeben sich Verbundhaftungswerte von > 3N/15mm, wobei die Metallschicht auf die PE-Folie übergeht.

### Beispiel 6

Die Versuche erfolgten auf der Kaschiermaschine gemäß Beispiel 1. Als erste Folie wird ein 60 µm dickes Polyethylen (LLDPE) dem Kaschierspalt zugeführt. Als zweite Folie ein 12 µm dicke PET-Folie, die mit einer PVC-basierenden Farbe bedruckt ist Die Polyethylenfolie wird auf der Fügeseite kurz vor dem Kaschierspalt mit Plasmagas beaufschlagt. Die Kaschiergeschwindigkeit ist 20 m/min Als Arbeitsgas wird eine Mischung aus 0,333 ℓ·s⁻¹ [20 slm] Argon 4.5 und 0,333 ℓ·s⁻¹ [20 slm] O₂ verwendet. Die Kathode und die Anode werden mit jeweils 0,042 ℓ·s⁻¹ [2.5 slm] Argon 5.0 gespült. Der Abstand zwischen Plasmaaustrittsöffnung und Folienoberfläche beträgt 2 mm. Nach dem Kaschierspalt ergeben sich Verbundhaftungswerte von > 3N/15mm. Das Trennbild ergibt eine Teilung der Farbschicht.

### Beispiel 7

Die Versuche erfolgten auf der Kaschiermaschine gemäß Beispiel 1. Als erste Folie wird ein 50 µm dicke PE/PP-Copolymerfolie Polyethylen dem Kaschierspalt zugeführt. Als zweite Folie wird dem Spalt eine 15 µm dicke bidirektional gereckte Polyamidfolie, die mit einer PVC-basierenden Farbe bedruckt ist, zugeführt. Die Polyethylenfolie wird auf der Fügeseite kurz vor dem Kaschierspalt mit Plasmagas beaufschlagt Die Kaschiergeschwindigkeit ist 15 m/min Als Arbeitsgas wird eine Mischung aus 0,167 ℓ·s⁻¹ [10 slm] Argon 4.5 0,5 ℓ·s⁻¹ [30 slm] CO₂ verwendet Die Kathode und die Anode werden mit jeweils 0,042 ℓ·s⁻¹ [2,5 slm] Argon 5.0 gespült. Der Abstand zwischen Plasmaaustrittsöffnung und Folienoberfläche beträgt 3 mm. Nach dem Kaschierspalt ergeben sich Verbundhaftungswerte von > 3N/15mm. Das Trennbild ergibt eine Teilung der Farbschicht.

### Beispiel 8

In einer handelsüblichen Beschichtungsmaschine wird eine Folie mit einem Beschichtungsmaterial beschichtet. Üblicherweise wird bei inkompatiblen Materialien dabei ein Primer oder Haftvermittler vor dem Zusammenfügen auf die Folienbahn aufgebracht. In diesem Falle wird die Schmelzefahne des Beschichtungsmaterials kurz vor dem Zusammenbringen mit der Folie von einem atmosphärischen Breitstrahlpiasmabrenner wie er zuvor beschrieben wurde mit Plasmaarbeitsgas beaufschlagt.

Eine metallisierte Polyesterfolie mit 23 µm Dicke wird bei einer Geschwindigkeit von 30 m/min auf der metallisierten Seite mit einem Polyethylencopolymeren beschichtet. Beschichtungsbreite ist 300 mm. Die Schmelzefahne des Beschichtungsmateri als wird räumlich kurz vor dem Zusammenführen der beiden Materialien mit Plasmagas beaufschlagt Das Plasmaarbeitsgas besteht aus 0,333 ℓ·s⁻¹ [20 slm] Argon 4.5 und 0,167 ℓ-s⁻¹ [10 slm] Sauerstoff. Die Anode und Kathode werden jeweils mit 0,042 ℓ-s⁻¹ [2.5 slm] Argon 5.0 gespült. Der Abstand zwischen Plasmagasaustritt und Schmelzefahne beträgt dabei 10 mm. Die Beschichtungsdicke beträgt 20 µm. Die Verbundhaftung der beiden Verbundpartner kann anschließend als untrennbar bezeichnet werden und der Verbündhaftüngswert liegt > 6 N/mm.

### Beispiel 9

Bei gleichen Plasmaparametern, wie in Beispiel 8, wird ein 25 µm dickes Coextrudat aus 10 µm Polyamid 6/5 µm EVOH/ 10 µm Polyamid 6 mit einer 35 µm dicken Schicht aus Ionomer beschichtet Auch hier kann der Endverbund anschließend als untrennbar charakterisiert werden mit Verbundhaftungswerten > 4 N/mm.

## Patentansprüche

1. Verfahren zur Herstellung einer mehrschichtigen Folienbahn durch Zusammenfügen von mindestens zwei Folienbahnen (14, 16) und/oder mindestens einer Folienbahn (16) und mindestens einem Beschichtungsmaterial, wobei mindestens eine Folienbahn (16) und/oder mindestens ein Beschichtungsmaterial auf der Fügeseite mit einem vorzugsweise indirekten atmosphärischen Plasmatron (10) behandelt wird und dem Plasmatron ein Arbeitsgas zugefügt wird, **dadurch gekennzeichnet, dass** das Arbeitsgas mindestens ein reaktives Gas, mindestens ein reaktives Aerosol, mindestens ein Inertgas oder mindestens ein inertes Aerosol aufweist und der Verbundhaftüngswert zwischen den zusammengefügten Materialien nach der Plasmabehandlung mindestens 1 N/15 mm, vorzugsweise 2 N/15 mm beträgt.

2. Verfahren nach Anspruch 1, **dadurch gekennzeichnet, dass** das Arbeitsgas eine Mischung aus mindestens einem reaktiven Gas und/oder mindestens einem reaktiven Aerosol und mindestens einem Inertgas ist.

3. Verfahren nach Anspruch 2, **dadurch gekennzeichnet, dass** das reaktive Gas und/oder das reaktive Aerosol die jeweilige zu behandelnde Fügeseite zumindest teilweise oxidiert.

4. Verfahren nach Anspruch 2, **dadurch gekennzeichnet, dass** das reaktive Gas und/oder das reaktive Aerosol die jeweilige zu behandelnde Fügeseite zumindest teilweise vernetzt.

5. Verfahren nach Anspruch 2, **dadurch gekennzeichnet, dass** Bestandteile des reaktiven Gases und/oder das reaktive Aerosol auf die jeweilige zu behandelnde Fügeseite aufgepfropft werden.

6. Verfahren nach einem der Ansprüche 2 - 5, **dadurch gekennzeichnet, dass** der Anteil an reaktiven Komponenten in dem Arbeitsgas 5 - 95 Gew.-% beträgt.

7. Verfahren nach einem der Ansprüche 1 - 6, **dadurch gekennzeichnet, dass** ein Plasmatron mit einer länglichen Plasmakammer, die in kaskadiertem Aufbau eine Mehrzahl von elektrisch gegeneinander isolierten Neutroden umfasst, wobei die zur Erzeugung des Plasma-Lichtgas erforderlichen Elektroden koaxial zur Längsachse der Plasmakammer angeordnet sind und die Plasmastrahl-Austrittsöffnung parallel zur Längsachse der Plasmakammer verläuft, eingesetzt wird.

8. Verfahren nach einem der Ansprüche 1 - 7, **dadurch gekennzeichnet, dass** ein Plasmatron, bei dem zumindest eine Neutrode mit einem Permanentmagneten-Paar zur Beeinflussung der Form und der Position des Plasma-Lichtbogens versehen ist, eingesetzt wird.

9. Verfahren nach einem der vorhergehenden Ansprüche, **dadurch gekennzeichnet, dass** die Behandlung der Fügeseite voll- oder teilflächig ausgeführt wird.

10. Verfahren nach einem der vorhergehenden Ansprüche, **dadurch gekennzeichnet, dass** mindestens eine Folienbahn eine Metallfolie mit einer Dicke vorzugsweise kleiner 100 µm oder eine Kunststofffolie ist.

11. Verfahren nach einem der vorhergehenden Ansprüche, **dadurch gekennzeichnet, dass** mindestens eine der zusammenzufügenden Folienbahnen auf mindestens einer Seite metallisiert, mit Metall- und/oder Siliziumoxid beschichtet ist.

12. Verfahren nach einem der vorhergehenden Ansprüche, **dadurch gekennzeichnet, dass** mindestens eine der zusammenzufügenden Folienbahnen auf mindestens einer Seite, vorzugsweise auf der Fügeseite bedruckt ist.

13. Verfahren nach einem der vorhergehenden Ansprüche, **dadurch gekennzeichnet, dass** eine der zusammenzufügenden Folienbahnen eine siegelfähige Folie ist, die vorzugsweise aus Polyolefin Homo- oder Polyolefin Copolymeren, amorphem Polyethylenterephthalat oder anderen siegelfähigen Materialien besteht oder dass zumindest eines der Beschichtungsmaterialien eine siegelfähige Materialkomponente ist.

## Claims

1. Method for the production of a multilayered film web by connecting at least two film webs (14, 16) and/or at least one film web (16) and at least one coating material, where at least one film web (16) and/or at least one coating material is treated, on the side to be connected, with a preferably indirect atmospheric plasmatron (10) and a working gas is added to the plasmatron, **characterized in that** the working gas comprises at least one reactive gas, at least one reactive aerosol, at least one inert gas or at least one inert aerosol and the bond strength between the connected materials after plasma treatment is at least 1 N/15 mm, preferably 2 N/15 mm.

2. Method according to Claim 1, **characterized in that** the working gas is a mixture of at least one reactive gas and/or at least one reactive aerosol and at least one inert gas.

3. Method according to Claim 2, **characterized in that** the reactive gas and/or the reactive aerosol at least partially oxidizes the respective connecting side to be treated.

4. Method according to Claim 2, **characterized in that** the reactive gas and/or the reactive aerosol at least partially crosslinks the respective connecting side to be treated.

5. Method according to Claim 2, **characterized in that** components of the reactive gas and/or the reactive aerosol are grafted onto the respective connecting side to be treated.

6. Method according to one of Claims 2-5, **characterized in that** the content of reactive components in the working gas is 5-95 percent by weight.

7. Method according to one of Claims 1-6, **characterized in that** the plasmatron used is a plasmatron with an elongate plasma chamber, which in a cascaded construction comprises a plurality of neutrodes electrically insulated from each other, where the electrodes required to generate the plasma light gas are arranged coaxially to the longitudinal axis of the plasma chamber and the plasma beam exit opening runs parallel to the longitudinal axis of the plasma chamber.

8. Method according to one of Claims 1-7, **characterized in that** the plasmatron used is a plasmatron in which at least one neutrode is provided with a permanent magnet pair to influence the shape and position of the plasma light arc.

9. Method according to one of the preceding claims, **characterized in that** the treatment of the connecting side is performed over all or part of the surface thereof.

10. Method according to one of the preceding claims, **characterized in that** at least one film web is a metal film with a thickness preferably of less than 100 µm, or a plastic film.

11. Method according to one of the preceding claims, **characterized in that** at least one of the film webs to be connected is metallized or coated with metal oxide and/or silicon oxide on at least one side.

12. Method according to one of the preceding claims, **characterized in that** at least one of the film webs to be connected is printed on at least one side, preferably on the connecting side.

13. Method according to one of the preceding claims, **characterized in that** one of the film webs to be connected is a sealable film which preferably comprises polyolefin homopolymers or polyolefin copolymers, amorphous polyethylene terephthalate or other sealable materials or **in that** at least one of the coating materials is a sealable material component.

## Revendications

1. Procédé de fabrication d'une bande de feuille multicouche par assemblage d'au moins deux bandes de feuille (14, 16) et/ou d'au moins une bande de feuille (16) et d'au moins un matériau de revêtement, dans lequel au moins une bande de feuille (16) et/ou au moins un matériau de revêtement sont traités du côté de la jonction avec un plasmatron atmosphérique de préférence indirect (10) et un gaz de travail est acheminé au plasmatron, **caractérisé en ce que** le gaz de travail présente au moins un gaz réactif, au moins un aérosol réactif, au moins un gaz inerte ou au moins un aérosol inerte, et la valeur d'adhérence de liaison entre les matériaux assemblés après le traitement au plasma vaut au moins 1N/15 mm, de préférence 2 N/15 mm.

2. Procédé selon la revendication 1, **caractérisé en ce que** le gaz de travail est un mélange d'au moins un gaz réactif et/ou d'au moins un aérosol réactif et d'au moins un gaz inerte.

3. Procédé selon la revendication 2, **caractérisé en ce que** le gaz réactif et/ou l'aérosol réactif oxydent au moins partiellement le côté respectif de la jonction à traiter.

4. Procédé selon la revendication 2, **caractérisé en ce que** le gaz réactif et/ou l'aérosol réactif réticulent au moins partiellement le côté respectif de la jonction à traiter.

5. Procédé selon la revendication 2, **caractérisé en ce que** des constituants du gaz réactif et/ou de l'aérosol réactif sont greffés sur le côté respectif de la jonction à traiter.

6. Procédé selon l'une quelconque des revendications 2 à 5, **caractérisé en ce que** la proportion de composants réactifs dans le gaz de travail est de 5 à 95% en poids.

7. Procédé selon l'une quelconque des revendications 1 à 6, **caractérisé en ce qu'**on utilise un plasmatron avec une chambre à plasma de forme oblongue, qui comprend une pluralité de neutrodes isolées électriquement les unes des autres, montées en cascade, les électrodes nécessaires pour la production du gaz lumineux de plasma étant disposées coaxialement à l'axe longitudinal de la chambre à plasma et l'ouverture de sortie du faisceau de plasma s'étendant parallèlement à l'axe longitudinal de la chambre à plasma.

8. Procédé selon l'une quelconque des revendications 1 à 7, **caractérisé en ce qu'**on utilise un plasmatron dans lequel au moins une neutrode est prévue avec une paire d'aimants permanents pour influencer la forme et la position de l'arc de plasma.

9. Procédé selon l'une quelconque des revendications précédentes, **caractérisé en ce que** le traitement du côté de la jonction est réalisé sur toute la surface ou sur une surface partielle.

10. Procédé selon l'une quelconque des revendications précédentes, **caractérisé en ce qu'**au moins une bande de feuille est une feuille métallique ayant une épaisseur de préférence inférieure à 100 µm ou bien une feuille de plastique.

11. Procédé selon l'une quelconque des revendications précédentes, **caractérisé en ce qu'**au moins l'une des bandes de feuille à assembler, métallisée au moins sur un côté, est revêtue d'oxyde métallique et/ou d'oxyde de silice.

12. Procédé selon l'une quelconque des revendications précédentes, **caractérisé en ce qu'**au moins l'une des bandes de feuille à assembler est imprimée sur au moins un côté, de préférence sur le côté de la jonction.

13. Procédé selon l'une quelconque des revendications précédentes, **caractérisé en ce que** l'une des bandes de feuille à assembler est une feuille thermosoudable, qui se compose de préférence de polyoléfine, de copolymères homo- ou polyoléfiniques, de polyéthylènetéréphtalate amorphe ou d'autres matériaux thermosoudables, ou en ce qu'au moins l'un des matériaux de revêtement est un composant de matériau thermosoudable.
